# DEMANDE DE BREVET EUROPEEN

(11) **EP 0 858 736 A1**
(43) Date de publication de la demande: **19.08.1998**
(21) Numéro de dépôt: 98400330.1
(22) Date de dépôt: 12.02.1998
(51) Int. Cl.: A01K 1/00, A01K 1/02, E04H 5/08

(54) **Installation pour l'élevage d'animaux**

(30) Priorité: 12.02.1997 FR 9701610
(71) Demandeur: Vitalac, 22160 Carnoet (FR); Rose-Eludis Charpente, 22400 Lamballe (FR)
(72) Inventeur: Le Calvez, Gilbert, 22200 Graces (FR); Rose, Loic, 22400 Lamballe (FR)
(74) Mandataire: Thibon-Littaye, Annick

(57) **Abrégé**

Pour l'élevage d'animaux tels que des porcelets juste après sevrage, l'invention propose une installation qui est avantageusement constituée à partir d'éléments préfabriqués à assembler sur le site d'élevage. L'installation comporte au moins une paire de deux modules (1, 2) de boxes individuels (8) qui s'assemblent en ménageant entre eux un couloir central de circulation du personnel (9), et l'ensemble se ferme par une porte étanche (19a) livrant accès audit couloir central par l'intermédiaire d'un sas sous pression contrôlée (3). Les différentes cloisons qui limitent les boxes sont recouvertes d'un revêtement de propreté évitant la prolifération microbienne et facile à laver. Au moins celles qui sont en contact avec l'atmosphère extérieure intègrent avantageusement un matériau d'isolation thermique.

## Description

La présente invention concerne la conception et la réalisation des installations pour l'élevage d'animaux, dans le cadre de celles qui peuvent répondre en particulier aux besoins des conditions d'élevage d'animaux de bétail en bas âge et/ou de santé fragile.

En pratique, l'installation suivant l'invention est particulièrement adaptée à l'élevage d'animaux se trouvant dans des conditions de santé précaires, ce qui est notamment le cas des porcelets, principalement dans la période juste après sevrage. En effet, l'élevage des jeunes porcelets juste après sevrage nécessite des conditions d'hygiène strictes, en particulier une atmosphère exempte de microbes, et des conditions de température et de ventilation bien contrôlées, pour éviter les pertes et obtenir une croissance plus rapide.

L'invention vise principalement une telle installation pour l'élevage d'animaux qui est avantageusement constituée d'éléments préfabriqués à assembler sur le site d'élevage. Ce mode de fabrication permet de rationaliser le coût de fabrication et d'obtenir un produit fini uniforme qui réponde aux critères de qualité et d'hygiène souhaités.

L'art antérieur en ce domaine est illustré par la publication de la demande de brevet français FR-A-2573620, qui concerne une construction mobile à usage d'étable. Dans ce document, on décrit la réalisation d'un bâtiment à partir de deux modules symétriques comportant chacun une série de compartiments individuels. Une allée centrale est ménagée entre les deux modules. Le même document décrit différentes dispositions qui sont faites pour faciliter le transport des éléments préfabriqués jusqu'à un site où ils se montent sur une structure de réception fixe. Chaque module comporte une armature formant un cadre de structure fait de barres assemblées par soudage entre elles. On observe par contre que, s'agissant d'une étable pour bovins ou chevaux, les compartiments sont normalement ouverts à l'air libre et simplement fermés par une corde ou chaîne.

Les problèmes que la présente invention s'est fixé de résoudre subsistent donc, au moins pour ce qui concerne le respect de conditions d'élevage contrôlées et bien qu'il puisse être utile à l'homme de l'art de se référer aux techniques connues en matière de bâtiments construits à partir d'éléments préfabriqués et/ou de bâtiments démontables et transportables par modules séparés.

Pour mieux satisfaire aux besoins pratiques de l'industrie agro-alimentaire, la présente invention propose une installation qui certes est avantageusement constituée d'éléments préfabriqués à assembler sur le site d'élevage, mais qui, surtout et essentiellement, comporte au moins une paire de deux modules de boxes individuels qui s'assemblent en ménageant entre eux un couloir central de circulation du personnel, et dans laquelle l'ensemble se ferme par une porte étanche livrant accès audit couloir central par l'intermédiaire d'un sas sous pression contrôlée. Les différentes cloisons qui limitent les boxes sont avantageusement recouvertes d'un revêtement de propreté, de type décontaminable, évitant la prolifération microbienne et facile à laver. Au moins celles qui sont en contact avec l'atmosphère extérieure intègrent avantageusement un matériau d'isolation thermique.

Conformément à un mode de réalisation préféré pour être particulièrement bien adapté aux circonstances industrielles actuelles, qui demandent une construction préfabriquée convenant notamment pour l'élevage de porcelets, l'installation suivant l'invention, constituée de plusieurs éléments déposés sur une infrastructure préparée sur le site et raccordés entre eux, comporte au moins une paire de modules symétriques par rapport à un plan médian qui se raccordent dans ledit plan pour former, après assemblage, le bâtiment d'accueil des animaux, et d'un sas d'entrée qui est mis en place contre une façade avant formée par le raccordement de deux demi-façades symétriques d'une paire de modules et qui contient tous les dispositifs nécessaires à la gestion de l'élevage, donc notamment à la préparation des aliments et des produits de soin et d'hygiène. En fonctionnement, ce sas est maintenu en dépression par rapport à l'atmosphère régnant à l'intérieur des modules et du couloir central de circulation, et préférence aussi en surpression par rapport à l'atmosphère extérieure au bâtiment.

Les modules symétriques et le sas sont fabriqués en atelier et transportés ensuite sur le site de montage. Ils ont donc, de préférence, des dimensions compatibles avec les normes établies pour le transport routier, qui sont limitées. Pour construire de plus grandes installations susceptibles d'accueillir plus d'animaux, il est possible, selon l'invention, d'associer en ligne plusieurs paires de modules dont les modules se succèdent de part et d'autre d'un couloir central continu, un sas unique étant disposé à l'une des extrémités de la ligne. Plusieurs lignes de paires de modules peuvent également être disposées en parallèle, chaque ligne étant alors associée à un sas d'accès qui lui est propre. On obtient ainsi une grande flexibilité de l'installation, permettant de faire varier le nombre d'animaux élevés. Il à noter également que dans certains cas, notamment pour se prêter à un contour particulier du terrain disponible, on peut être conduit à supprimer l'un des modules d'une même paire, en complétant le module restant pour terminer la fermeture latérale du couloir dit central.

Suivant des caractéristiques préférées de l'invention, le bâtiment comporte un sol supporté par des fers, qui reposent sur une infrastructure constituée par des longrines de béton, des parois latérales dans lesquelles sont ménagées des fenêtres (de préférence non ouvrantes) et des façades avant et arrière dans lesquelles sont ménagées des portes de communication se fermant . Il est avantageusement divisé en un nombre pair de boxes, ou cases, répartis symétriquement par rapport à un couloir central de circulation, dont le plan longitudinal médian est le plan d'assemblage des deux modules symétriques d'une paire de modules. Chaque compartiment formant un box comporte un ou plusieurs caillebotis sur le(s)quel(s) circulent les animaux, le(s) caillebotis étant disposé(s) au-dessus d'une fosse à lisier . Des cloisons amovibles séparent chaque box des boxes adjacents et chaque box du couloir central.

Selon l'invention, chaque module est avantageusement supporté par au moins deux longerons, par exemple des fers en I, et comporte une demi-façade avant, dans laquelle est ménagée une ouverture correspondant à une demi-porte, une demi-façade arrière, et, entre les deux demi-façades susmentionnées, une paroi latérale, de préférence munie d'au moins une fenêtre, ainsi que les éléments d'une demi-charpente pour supporter un toit. Une structure de plancher repose sur lesdits longerons entre les deux demi-façades précitées, un plancher constituant le fond d'une fosse à lisier étant disposé au droit des boxes d'élevage, la partie correspondant au couloir central de circulation ne comportant pas un tel plancher. Un plafond est fixé à chaque demi-charpente au-dessus de la partie correspondant aux boxes, la partie correspondant au demi-couloir central de circulation ne comportant pas de plafond. En d'autres termes, le bâtiment d'élevage est coupée en deux modules par rapport à un plan médian passant par le milieu du toit et le milieu du couloir de circulation, les boxes se disposant de part et d'autre de ce couloir.

Sur les longerons longitudinaux supportant les modules il est fixé perpendiculairement des traverses régulièrement espacées. Un des longerons est avantageusement disposé au niveau du demi-couloir et un autre au voisinage de la paroi latérale. La fixation des traverses sur les longerons peut se faire par tout moyen approprié. Elle se fait, par exemple, lorsque les longerons sont des fers en I, à l'aide de pattes métalliques soudées sur lesdits fers.

Le plancher constituant le fond de la fosse à lisier peut être formé notamment de panneaux en bois contreplaqué, fixés sur les traverses. La paroi latérale et les demi-façades avant et arrière sont de préférence formées par une ossature qui supporte des panneaux de cloison présentant de bonnes propriétés d'isolation thermique. En général, il s'agira de cloisons à isolation intégrée, donc notamment à doubles parois encadrant des plaques faites en un matériau isolant, constitué par exemple par de la mousse de matière plastique ou un feutre tel que de la laine de verre ou de la laine de roche. De préférence, les plaques d'isolant sont disposées entre les poutres de l'ossature, et celle-ci étant en bois, on fixe dessus par clouage des panneaux continus, de préférence en bois, pour former la paroi interne, tandis que pour former la paroi externe, des tôles métalliques ou en matière plastique sont fixées sur ladite ossature du côté opposé. De même, des panneaux, notamment en bois, sont fixés à la demi-charpente du toit pour former le plafond.

Avant montage du bâtiment, les différents panneaux formant le fond de la fosse à lisier, les parois internes de la façade latérale et des demi-façades et le plafond sont avantageusement recouvertes d'un revêtement de protection, résistant et décontaminable. Un tel revêtement peut être composé notamment d'une couche de ce que l'on appelle couramment un "mat", à savoir une matière encore collante de fibres de verre et de résine polymérisable, qui est lui-même recouvert d'au moins une, et de préférence de deux couches successives d'une composition organique de protection de surface, en une matière qu'il sera bon de choisir compatible et apte à se lier avec la sous-couche, par copolymérisation notamment, comme on sait le faire en utilisant des matières dites "gelcoat" à base de résines de polyesters. Le revêtement ainsi constitué n'est pas poreux, il est lisse et il n'a pas tendance à se fendre et à se craqueler ; il ne retient donc pas les bactéries ou autres salissures contaminantes et il est facilement lavable au jet. Il permet de maintenir dans le bâtiment une hygiène optimale en conformité avec les objectifs de l'invention.

Le fond de la fosse à lisier du module est, de préférence, légèrement en forme de gouttière, et il présente une légère pente de la façade avant vers la façade arrière. Le plancher pourrait également avoir une autre configuration, par exemple en forme de cuvette. Au voisinage du point le plus bas du fond de la fosse à lisier, il est avantageusement prévu au moins un trou d'écoulement relié à un conduit d'écoulement pour le raccordement à un dispositif d'évacuation du lisier. Ce trou peut notamment être disposé au centre d'un bac de rétention ménagé sur toute la largeur de la fosse, ledit bac constituant une dépression d'environ 40 cm de profondeur à son point le plus bas.

Au-dessus du sol des modules, la structure des modules est équipée des supports nécessaires au montage des caillebotis et à la fixation des cloisons de boxes. Les différentes gaines utiles pour le passage de l'air, de l'électricité, des lignes de commande automatiques et de l'eau sont également disposées sur les parois des modules, à moins qu'il soit préférable de les dissimuler dans les combles du bâtiment.

De préférence, chaque module de boxes est muni, pour le transport, de poteaux, par exemple verticaux, qui sont amovibles et disposés entre la demi-charpente de toit située au-dessus du demi-couloir central de circulation et la partie des traverses correspondant audit demi-couloir, c'est-à-dire sur le côté ouvert du module. Ces poteaux sont destinés à éviter la déformation du module pendant le transport et avant son assemblage avec le module symétrique d'une même paire de modules.

Le sas qui vient se raccorder sur la façade avant de l'ensemble des deux modules de boxes est également constitué d'une ossature complète, notamment en bois, avec une isolation intégrée, faite par exemple de laine de roche ou de verre, ossature sur laquelle sont fixés, pour former les faces externe et interne, sauf au niveau des ouvertures, des panneaux, notamment en bois pour la face interne et en matière plastique ou en tôle nervurée pour la face externe. Le sas est, de préférence, muni d'un auvent destiné à mettre à l'abri des équipements techniques extérieurs, par exemple une centrale de ventilation et de purification de l'air circulant à l'intérieur du local d'élevage proprement.

L'intérieur du sas est, de préférence, muni. d'éléments pour la propreté corporelle à utiliser par le personnel (douche, lavabo et vestiaire pour que l'exploitant puisse changer de tenue) . Une zone est également avantageusement prévue pour le stockage des aliments livrés en sacs et d'autres produits devant servir aux animaux. Une trappe est alors avantageusement prévue dans la paroi du sas pour faire rentrer les sacs pleins et évacuer les sacs vides.

Le sas contient en outre les armoires de gestion et d'automatisation, en particulier tous les organes qui sont destinés à contrôler le bon fonctionnement des équipements techniques et assurer leur réglage en fonction du comportement de l'animal, des conditions climatiques ou d'autres paramètres. On y trouvera en particulier les organes de régulation qui contrôlent la ventilation en température et en pression, en assurant par là les pressions différentes relatives entre le local des boxes, l'intérieur du sas et l'atmosphère extérieure.

Comme expliqué ci-dessus, pour monter le bâtiment selon l'invention, on dépose les deux modules d'une même paire sur l'infrastructure en béton préparée à l'avance, de façon symétrique par rapport à un plan, les deux parties ouvertes correspondant à un demi-couloir de circulation étant adjacentes ; on les fixe ensemble par jointoiement mécanique, par exemple par boulonnage. On pose le plancher du couloir après isolation et on complète le plafond au-dessus d'une trappe guillotine placée à environ 20 cm du plancher du couloir central de circulation.

L'invention a aussi pour objet un procédé de montage d'une installation selon l'invention, selon lequel on dépose deux modules sur une infrastructure préparée à l'avance, les deux modules étant mis en place symétriquement de façon que leurs parties ouvertes correspondant à un demi-couloir de circulation soient adjacentes, on les fixe ensemble par jointoiement mécanique, on pose le plancher du couloir central de circulation sur la structure de plancher de l'ensemble des deux modules et la partie du plafond située au-dessus dudit couloir sur la charpente de toit de l'ensemble des deux modules, on recouvre ledit plancher et ladite partie de plafond d'un mat de fibres et de résine, puis d'un revêtement de surface, et on enlève les poutres amovibles de transport. On prévoit de préférence qu'après assemblage des deux modules d'une telle installation, on relie les ouvertures de soutirage du lisier ménagées dans les fosses à lisier des deux modules à une vanne d'évacuation du lisier vers une cuve de réception.

L'invention consiste, mises à part les dispositions exposées ci-dessus, en un certain nombre d'autres dispositions dont il sera plus explicitement question ci-après, à propos d'un exemple de réalisation particulier qui sera décrit en se référant aux dessins annexés, ledit exemple n'étant nullement limitatif.

Dans ces dessins :
- La figure 1 est une vue en perspective de l'installation selon l'invention après montage ;
- La figure 2 est une vue en coupe horizontale du bâtiment de la figure 1 ;
- L figure 4 est une vue en perspective d'un module de l'installation de la figure 1 avant son montage avec le module symétrique de la même paire ;
- La figure 5 représente un détail de la figure 4 ;
- La figure 6 montre un détail de lea figure 4 ;
- La figure 7 montre également une vue de détail de la fixation du caillebotis, en perspective ;
- La figure 8 est une vue de dessus de l'infrastructure au sol de l'installation de la figure 1.

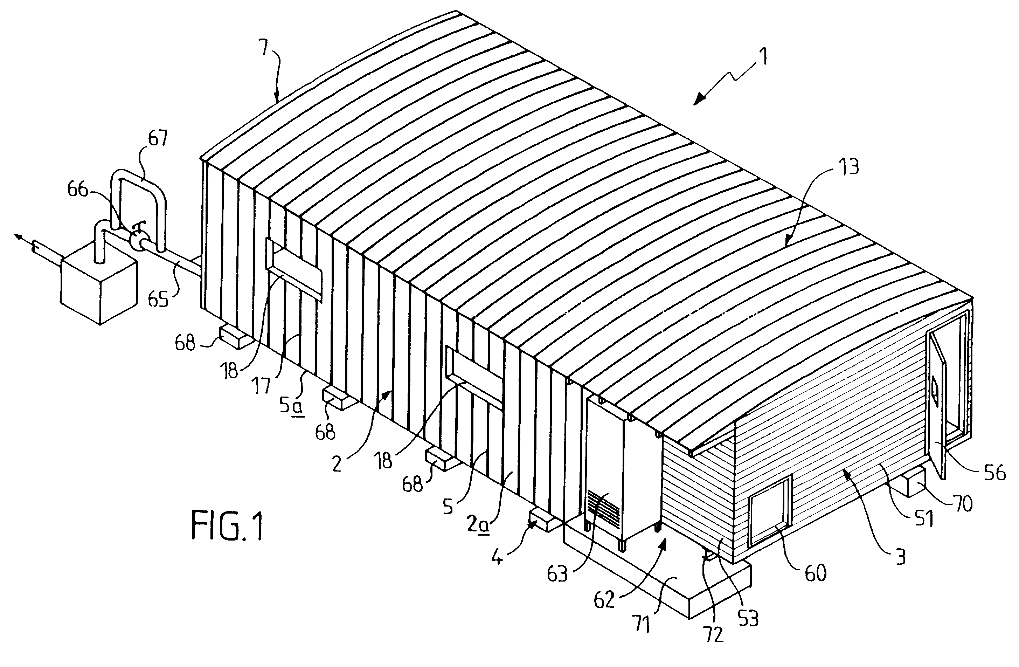

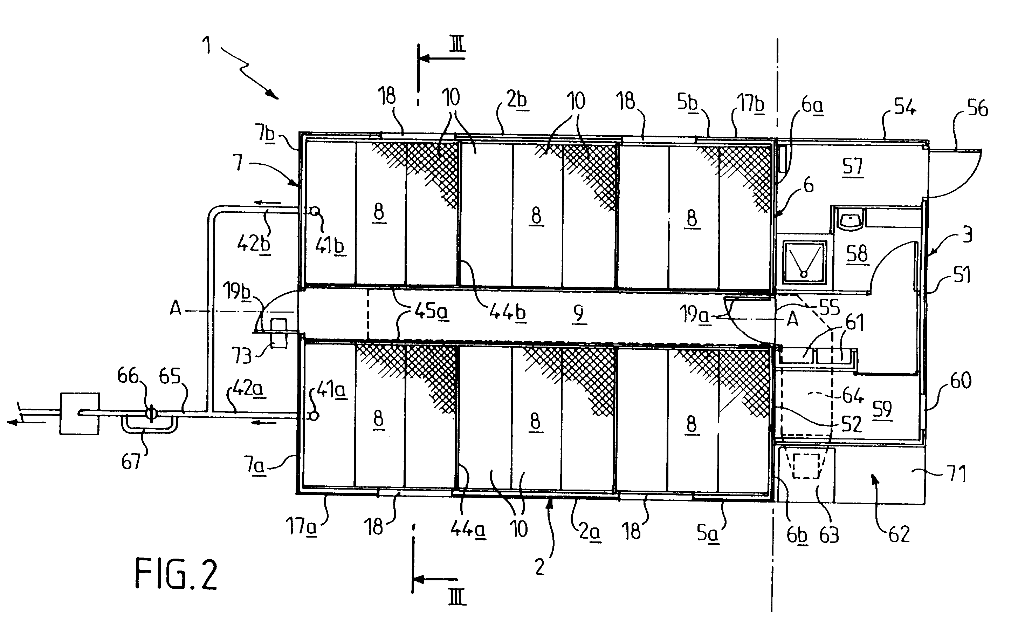

L'installation représentée, après montage, sur les figures 1 et 2 est désignée dans son ensemble par la référence 1. Elle est constituée de trois éléments 2a, 2b, 3, qui sont préfabriqués en atelier, par conséquent à l'abri des intempéries ; ces éléments sont posés sur une infrastructure en béton 4, préparée sur place au préalable sur le sol. Ces éléments comportent deux modules 2a et 2b, symétriques et identiques, qui sont montés symétriquement par rapport à un plan vertical A-A (voir figure 2), et un sas 3, qui est mis en place contre sur la face transversale avant des deux modules 2a et 2b juxtaposés.

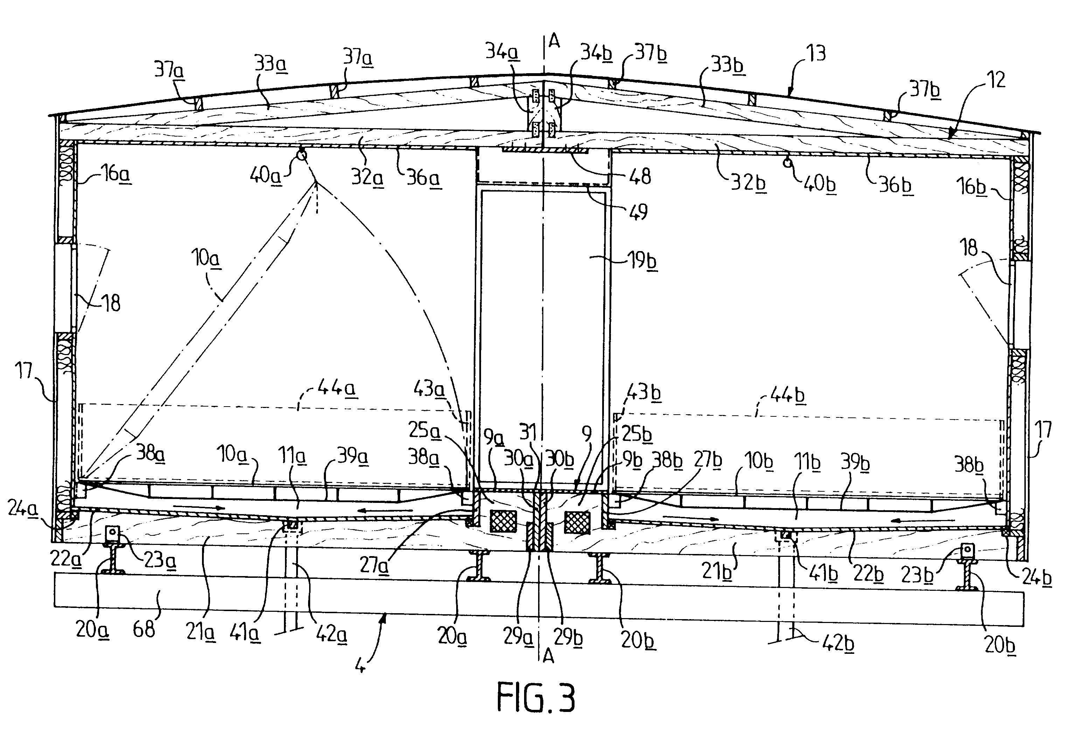

Comme visible sur les figures 1 et 2, le bâtiment 2 destiné à accueillir les animaux, en particulier des porcelets, comporte des parois latérales 5a et 5b, une façade avant 6 contre laquelle est disposé le sas 3 et une façade arrière 7. La structure de plancher est divisée en boxes tels 8a, 8b, séparés par un couloir central de circulation 9. Le sol de chaque box 8 comporte des caillebotis 10a, 10b, sur lesquels sont placés les animaux, et les caillebotis sont disposés au-dessus de fosses à lisier 11a, 11b (figure 3). Le bâtiment 2 comporte étalement une charpente 12, et l'ensemble de l'installation est couvert par un toit 13.

Les deux modules 2a, 2b étant identiques, seul l'un d'eux sera décrit en détail, étant entendu que les éléments identiques référencés avec l'indice a pour le premier module seront référencés avec l'indice b pour le second module.

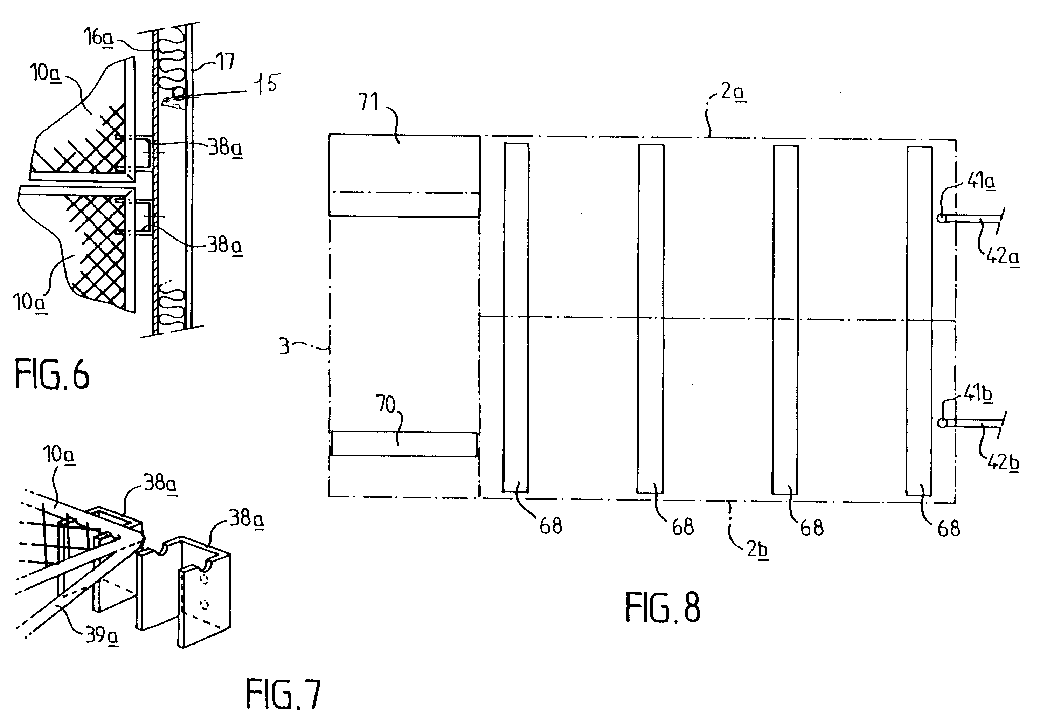

Le module 2a comporte une paroi latérale 5a, une demi-façade avant 6a, contre laquelle est monté le sas 3, et une demi-façade arrière 7a. La paroi latérale 5a et les demi-façades 6a et 7a sont essentiellement constituées par une structure de poutres de bois 14, disposées verticalement et horizontalement selon le mode de réalisation représenté, et par une cloison 15, à doubles parois encadrant un matériau d'isolation thermique 15a (figure 6). Ce matériau est posé entre les poutres de la structure 14, et sur celles-ci sont clouées des plaques de contreplaqué 16a, de façon à former la paroi interne du module 2a, et des plaques de polyester nervurées 17, destinées à former la paroi extérieure. Des fenêtres 18a sont ménagées dans la paroi latérale 5a. Elles sont fermées étanches au sein de la cloison.

Une ouverture est prévue dans les demi-façades avant et arrière pour correspondre à une demi-porte d'accès aux boxes par le couloir central 9. On a désigné par 19a et 19b respectivement les portes associées aux façades avant et arrière du bâtiment. Elles se situent aux extrémités du couloir central, qu'elles ferment par rapport à l'extérieur quand les deux modules sont raccordés.

La porte 19b en face arrière comporte une goulotte cylindrique 73 pour l'introduction des animaux dans le bâtiment, ladite goulotte étant équipée d'une trappe de type guillotine et étant disposée à faible distance du bas de la porte. La porte 19a est celle qui communique avec le sas 3 quand celui-ci est raccordé en face avant à l'ensemble des deux modules. Elle est réservée à l'accès du personnel exploitant et du personnel d'entretien. Les deux portes d'accès aux extrémités du couloir central sont construites pour se fermer de manière étanche. En effet, quand le module est en fonctionnement, l'atmosphère intérieure est maintenue en surpression et isolée des contaminations extérieures.

Le module 2a repose sur deux fers en I parallèles 20a. Sur ces fers en I 20a, sont disposées des traverses ou solives en bois 21a, sur lesquelles sont fixées des plaques de contreplaqué 22a, destinées à former le fond de la fosse lla, dans laquelle est recueilli le lisier, et une moitié 9a du couloir central de circulation 9. Les fers 20a sont parallèles, l'un d'entre eux étant disposé au voisinage de la paroi latérale 5a et l'autre au voisinage du bord du demi-couloir 9a de circulation.

Les traverses 21a sont parallèles entre elles et fixées perpendiculairement aux fers 20a par des pattes 23a soudées aux fers 20a. A une de leurs extrémités, les traverses 21a supportent les poutres verticales de la structure 14a de la paroi latérale 5a et des entretoises 24a sont disposées horizontalement entre les traverses. A l'autre extrémité, les traverses 21a comportent une tête rectangulaire 25a ayant une hauteur supérieure à celle du reste de la traverse 21a. Une planche 30a est clouée ou vissée sur une planche 29a pour former le bord du demi-couloir 9a. Le plancher 31 du couloir 9 est fixé, après montage des deux modules, sur le bord supérieur de planches 27a, 27b, 30a, 30b et sur le bord supérieur des têtes 25a. 25b des deux traverses 21a, 21b des deux modules 2a, 2b se faisant vis-à-vis.

Le bord supérieur des traverses 21a est légèrement incurvé de façon à donner aux plaques de contreplaqué 22a-22b, constituant le fond des fosses à lisier 11a-11b respectivement, une forme en gouttière, avec une légère pente de l'avant du module 2a vers l'arrière de celui-ci.

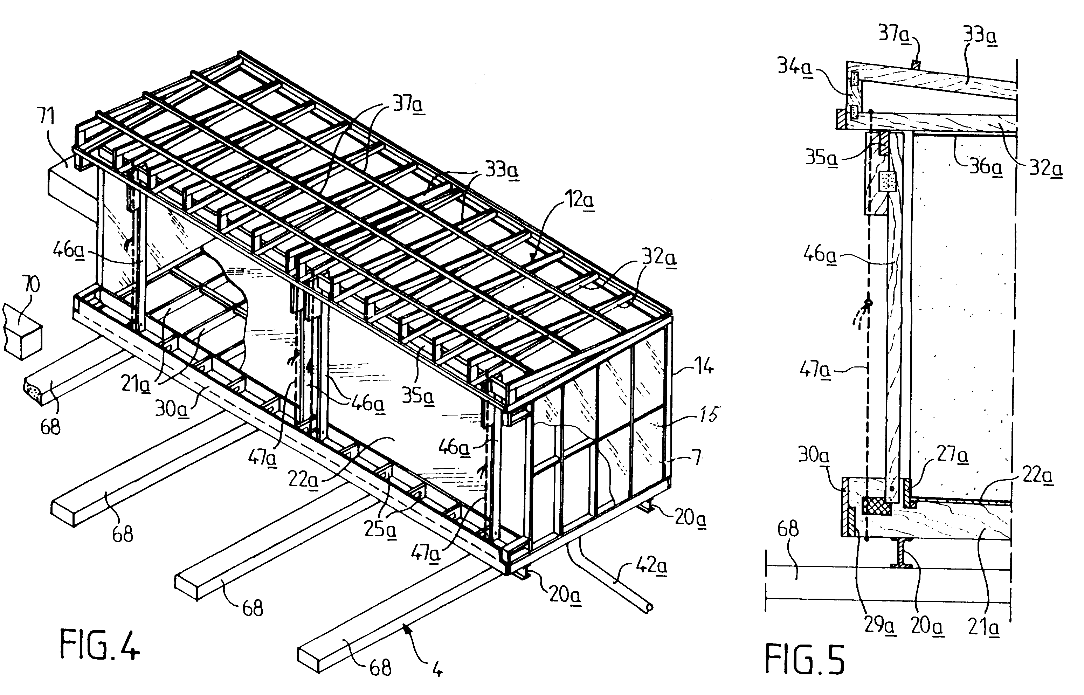

La demi-charpente de toit 12a du module est également constituée par une structure en bois. Celle-ci comporte des pannes horizontales 32a et des chevrons inclinés 33a reposant par l'ntermédiaire d'une cale verticale 34a sur les pannes horizontales 32a. Les pannes horizontales 32a reposent sur des poutres horizontales longitudinales 35a (figure 4) qui sont mises en place à titre provisoire sur la demi-charpente et qui ne sont utiles que tant que les deux demi-charpentes ne sont pas assemblées l'une avec l'autre. Sur les chevrons inclinés sont clouées des lattes longitudinales 37a. Des panneaux de contreplaqué 36a sont cloués sous les pannes horizontales 32a pour former le plafond, sauf sur la partie correspondant au demi-couloir.

Avant montage, les panneaux intérieurs en contreplaqué 22a formant le fond de la fosse à lisier lla, la face interne de la paroi latérale 5a, les panneaux 36a formant le plafond, ainsi que la surface interne de la planche 27a, sont recouverts d'un mat fait de fibres de verre mélangées à une matrice liante de résine organique, puis de deux couches de couche de finition ("gelcoat") de polyester blanc, de façon à obtenir un revêtement continu, non poreux, lisse et ne comportant aucune craquelure.

Sur ce revêtement, au niveau de la bordure de la planche 27a, tant sur ladite planche 27a que sur la paroi latérale 5a, sont fixés des supports 38a pour les panneaux de caillebotis 10a. Ces supports 38a ont la forme en U représentée sur la figure 7, ce qui permet de laisser un espace entre le bord du caillebotis et la paroi latérale 5a ou la planche 27a formant le bord de la fosse à lisier. Cet espace, qui est d'environ 3 cm dans le cas d'un élevage de porcelets, permet aux porcelets de déféquer en dehors du caillebotis sans se coincer les pattes, ce qui simplifie, par conséquent, le nettoyage de celui-ci. De plus, il constitue un espace de propreté évitant la pollution des parois du local et facilitant leur décontamination.

Le caillebotis 10a est constitué par une grille fixée sur des barres, les deux barres latérales parallèles aux traverses 21a étant rigidifiées par des skis 39a formant une poutre-treillis au-dessous desdites barres. Les supports 38a sont disposés de façon que la grille du caillebotis 10a soit dans le même plan que le plancher 31 du couloir 9. La forme en U des supports 38a et un encochage des ailes du U permettent une rotation du caillebotis autour de la barre d'extrémité portant la grille, qui repose sur deux de ces supports. On peut ainsi relever aisément le caillebotis 10a ; un crochet 40a, fixé au plafond, permet alors de maintenir le caillebotis relevé.

Le fond de la fosse à lisier 10a comporte, au voisinage de la demi-façade arrière 7a, une ouverture 41a pour l'écoulement du lisier ou d'autres rejets, tels que les eaux de lavage. L'ouverture 41a se prolonge par un conduit 42a permettant un raccordement au moment du montage. Cette ouverture est placée au centre d'un bac de rétention qui s'étend sur toute la largeur de la fosse et qui constitue une dépression d'environ 40 cm dans sa zone centrale ; ce bac de rétention facilite le lavage, en évitant le retour des eaux de lavage et en améliorant leur écoulement.

Des fers en U 43a, formant des glissières verticales, sont également fixés de façon à permettre une installation amovible des cloisons transversales 44a de séparation entre les boxes 8a. Des cloisons amovibles 45a peuvent également être fixées sur les mêmes glissières 43a, pour établir une séparation entre les boxes 8a et le couloir de circulation 9. Les barres, qui constituent la bordure du caillebotis, sont espacées des parois qui leur sont parallèles d'environ 3 cm, non seulement par rapport à la paroi latérale 5a et à la planche 27a, comme précédemment indiqué, mais aussi par rapport aux cloisons versales 44a de séparation des boxes.

Dans le module avant montage, la paroi latérale 5a, les façades avant et arrière 6a et 6b, et le fond de la fosse à lisier lla, sont recouverts de résine, et les différents conduits nécessaires pour l'alimentation en eau et en courant y sont fixés. Cependant, la répartition de l'alimentation électrique est entièrement réalisée dans les combles du bâtiment, au-dessus des plaques 36a du plafond. Le plancher et le plafond au niveau du couloir 9 ne sont pas mis en place.

Pour le transport du module, comme illustré sur la figure 4, on fixe par emboîtage des poteaux verticaux 46a entre les pannes horizontales 32a du toit et la poutre longitudinale du toit 35a située au bord du demi-couloir 9a, pour éviter toute déformation du module au cours du transport. Pour éviter que les poteaux ne se déboîtent au cours du transport, on tend une corde 47a entre une panne horizontale 32a du la tête 25a de la traverse 21a correspondante.

Pour assembler les deux modules, on les pose par les fers 20a-20b sur l'infrastructure 4 et on les met côte à côte, symétriquement, les deux demi-couloirs centraux étant adjacents. On fixe ensemble les deux structures de charpente 12a et 12b à l'aide de plaques de jonction 48 coopérant avec les extrémités en contact de deux pannes horizontales 32a et 32b correspondantes. On fixe alors le plafond 49 au droit du couloir 9. Ce plafond 49 supporte un caisson en polyester ayant une section droite en forme de U, dans lequel sont ménagées des ouvertures pour les grilles d'aération, ledit caisson servant de gaine d'aération.

Après isolation, on fixe le plancher 31 du couloir sur les têtes 25a-25b des traverses 21a-21b. On recouvre ces parties d'un revêtement identique à celui déjà déposé sur les parois intérieures des modules 2a-2b, de façon qu'il n'y ait aucune discontinuité dans le revêtement, ce qui permet de rendre le bâtiment étanche. On monte ensuite les portes 19a-19b sur la façade avant 6 et la façade arrière 7 du bâtiment 2.

Le sas 3 est constitué par une façade avant 51, une façade arrière 52 et deux parois latérales 53 et 54, d'une structure de sol et d'une charpente (voir figures 1 et 2). Ces différentes parties ont le même type de structure en bois que les parties correspondantes des modules 2a-2b. Les façades 51-52 et les parois latérales 53-54 sont recouvertes de bois contreplaqué sur la face interne et d'une tôle ou d'un revêtement plus esthétique en bois sur la face extérieure.

Le plancher est également porté par des fers en I posés sur l'infrastructure 4, parallèlement aux traverses 21a-21b. Ces fers 72 permettent le transport du sas et sa mise en place sur l'infrastructure 4 contre l'un des pignons de l'ensemble constitué par les deux modules 2a-2b, à savoir ici le pignon formé par les deux demi-façades 6a et 6b. Comme dans le cas des modules, sur ces fers sont fixées des traverses, et des panneaux de contreplaqué sont fixés sur les traverses.

Dans la face arrière du sas est ménagée une ouverture 55 susceptible de coïncider avec la porte 19a de la façade avant de l'ensemble constitué par les deux modules 2a et 2b. Sur la façade avant du sas 3 est disposée latéralement une porte 56 communiquant avec un vestiaire 57 et une salle d'eau 58 contenant une douche et un lavabo, de façon à permettre à l'exploitant de l'installation bâtie de se changer et de se laver avant de pénétrer dans le bâtiment d'élevage et d'entrer en contact avec les porcelets.

Le sas comprend également une zone de stockage 59 pour les sacs contenant les aliments destinés aux animaux. Cette zone communique avec l'extérieur par une trappe d'accès 60 permettant de faire entrer les sacs pleins et de ressortir les sacs vides. Dans le sas se trouvent également les armoires 61 de gestion et d'automatisation destinées à contrôler le bon fonctionnement des équipements techniques et à adapter les consignes de travail en fonction du comportement des animaux et des conditions climatiques.

Le sas 3, tel que représenté sur la figure 1, comporte une partie 62 formant auvent extérieur, sous laquelle est installée une centrale de ventilation 63 à débit variable. De préférence, cette centrale prépare un air filtré et préchauffé, qui est introduit sous pression dans le bâtiment 2 d'élevage par la gaine 64.

Lorsque les deux modules 2a-2b et le sas 3 ont été positionnés et.assemblés, on met en place une isolation thermique au-dessus du plafond et on fixe un toit léger 13, constitué par exemple par des bandes de polyester nervurées telles que celles qui sont utilisées de manière connue en bacs de toiture. Ces éléments de toit reposent sur l'ensemble des lattes 37a-37b des charpentes des modules 2a-2b et du sas 3.

On relie les deux conduits d'évacuation 42a-42b du lisier des modules 2a-2b à un conduit unique 65, lequel comporte une vanne 66 que l'on peut ouvrir et fermer manuellement. On peut, par exemple, utiliser une vanne à guillotine. Pour éviter que le niveau du liquide dans les fosses à lisier 11a-11b ne monte au-dessus d'un niveau déterminé et éviter, par exemple, que les porcelets ne baignent dans l'eau par suite d'une rupture d'une canalisation d'eau, une dérivation 67 est disposée au-dessus de la vanne 66 de manière à permettre de contourner celle-ci. Ce système de vanne 66 et de dérivation 67 est visible sur les figures 1 et 2.

L'infrastructure 4, préparée sur le site avant le montage des modules et du sas, est représentée sur la figure 8. Elle est composée, au niveau des modules, de longrines parallèles 68 et, au niveau du sas 3, d'une dalle 71 ayant des dimensions correspondant à l'auvent du sas et d'une longrine 70 perpendiculaire aux longrines 68. La dalle 71 et la longrine 70 sont plus épaisses que les longrines 68, de façon que le plancher du sas 3 soit au même niveau que le plancher 31 du couloir central de circulation 9 ménagé par les deux modules 2a-2b entre eux.

## Revendications

1. Installation pour l'élevage d'animaux, caractérisée en ce qu'elle comporte au moins une paire de deux modules (2a, 2b) de boxes individuels (8) qui s'assemblent en ménageant entre eux un couloir central de circulation du personnel (9), et en ce que l'ensemble du local ainsi constitué se ferme par une porte étanche (19a) livrant accès audit couloir central (9) par l'intermédiaire d'un sas (3) à pression contrôlée.

2. Installation suivant la revendication 1 pour l'élevage d'animaux de bétail en bas âge, tels que des porcelets, constituée à partir d'éléments préfabriqués à assembler sur le site d'élevage, déposés sur une infrastructure préparée sur le site, caractérisée par le fait lesdits modules (2a, 2b) de ladite paire sont symétriques et construits pour se raccorder l'un à l'autre suivant un plan de symétrie correspondant au plan médian dudit couloir de circulation (9), au niveau d'une structure de toit et/ou de plafond, d'une structure de sol et/ou de plancher et de deux couples de demi-façades (6.a, 6b), et en ce que ledit sas (3) est construit pour se positionner contre la façade (6) formée par le raccordement de deux demi-façades avant (6.a, 6b) en communiquant par une porte étanche avec l'extrémité correspondante dudit couloir central (9).

3. Installation selon la revendication 1 ou 2, caractérisée par le fait que les différentes cloisons qui limitent les boxes (8) sont recouvertes d'un revêtement de propreté, de type décontaminable, évitant la prolifération microbienne et facile à laver.

4. Installation suivant la revendication 3, caractérisé en ce que celles au moins celles desdites cloisons qui séparent le local des boxes de l'atmosphère extérieure intègrent un matériau d'isolation thermique.

5. Installation selon l'une des revendications 1 à 4, caractérisée par le fait que chaque module (2a, 2b) est supporté par au moins deux longerons (20a, 20b) et comporte une demi-façade (6a, 6b) avant dans laquelle est ménagée une ouverture correspondant à une demi-porte, une demi-façade arrière (7a, 7b), et, entre les deux demi-façades susmentionnées, une paroi latérale (5a, 5b), ainsi que les éléments d'une demi-charpente (14a, 14b) pour supporter un toit (13), une structure de plancher reposant sur lesdits longerons (20a, 20b), entre les deux demi-façades précitées un plancher, qui constitue le fond d'une fosse à lisier (11a, 11b) étant disposé sur ladite structure de plancher au droit de boxes (8) d'élevage, la partie de la structure de plancher, qui correspond à un demi-couloir central (9a, 9b) de circulation ne comportant pas de plancher, un plafond (36al) étant fixé à chaque demi-charpente au-dessous de la partie de la demi-charpente située au-dessus des boxes (8), la partie correspondant au demi-couloir central (9a, 9b) de circulation ne comportant pas de plafond.

6. Installation selon la revendication 5, caractérisée par le fait que sur les longerons (20a, 20b) supportant les modules sont fixés perpendiculairement des traverses (21a, 21b) régulièrement espacées, les longerons étant de préférence des fers en I (20a, 20b) sur lesquels les traverses (21a, 21b) sont fixées à l'aide de pattes (23a, 23b) soudées, et par le fait que le plancher constituant le fond de la fosse à lisier (11a, 11b) est formé par des panneaux (22a, 22b) fixés auxdites traverses (21a, 21b).

7. Installation selon la revendication 5 ou 6, caractérisée par le fait que la paroi latérale (5a, 5b) ainsi que les demi-façades avant et arrière (6a, 6b ; 7a, 7b) sont formées par une ossature (14) de poutres avec isolation (15) intégrée, des panneaux (16a, 16b) étant fixés sur l'ossature (14) pour former la paroi interne et des tôles (17a, 17b) nervurées métalliques ou en matière plastique étant également fixées sur l'ossature (14) pour former la paroi externe.

8. Installation selon l'une quelconque des revendications 1 à 7, caractérisée par le fait que sous les boxes il est formé une fosse à lisier (11a, 11b) reliée à un conduit (42a, 42b) de raccordement à un dispositif d'évacuation du lisier et en ce que lesdits boxes comportent des caillebotis relevables (10a, 10b) destinés à supporter les animaux élevés dans l'installation au-dessus de ladite fosse à lisier.

9. Installation selon la revendication 8, caractérisée par le fait qu'un espace libre de propreté est ménagé entre les parois intérieures de cloisons limitant les boxes (44a, 44b ; 45a, 45b) et lesdits caillebotis (10a, 10b).

10. Installation selon l'une quelconque des revendications 1 à 7, caractérisée par le fait que le sas (3) comporte des éléments de propreté corporelle (57, 58), pour le personnel une zone de stockage (59) des aliments pour le bétail et des armoires (61) de gestion et d'automatisme.
